# EUROPÄISCHE PATENTSCHRIFT

(11) **EP 1 099 056 B1**
(45) Veröffentlichungstag und Bekanntmachung des Hinweises auf die Patenterteilung: **18.12.2002**
(21) Anmeldenummer: 99938152.8
(22) Anmeldetag: 05.06.1999
(51) Int. Cl.: F16B 7/04, F16B 1/00

(54) **MECHANISCHES VERBINDUNGSELEMENT**
MECHANICAL CONNECTING ELEMENT
ELEMENT D'ASSEMBLAGE MECANIQUE

(30) Priorität: 30.07.1998 DE 19834305
(43) Veröffentlichungstag der Anmeldung: 16.05.2001
(73) Patentinhaber: G. Rau GmbH. & Co., 75172 Pforzheim (DE)
(72) Erfinder: NUSSKERN, Hans, D-75181 Pforzheim (DE); DAHM, Viktor, D-75179 Pforzheim (DE)
(74) Vertreter: Jany, Peter, Dr.
(86) Internationale Anmeldenummer: DE9901691
(87) Internationale Veröffentlichungsnummer: WO00006917

(56) Entgegenhaltungen:
- WO-A-89/12175
- WO-A-96/27744
- DE-A- 3 007 307
- US-A- 4 296 955

## Beschreibung

Die Erfindung betrifft ein Verbindungselement zum mechanischen Verbinden von Bauelementen, umfassend ein elastisch verformbares Spannelement, das im elastisch verformten Zustand eine Haltekraft auf mindestens ein durch das Verbindungselement verbundenes Bauelement ausübt, durch die eine kraftschlüssige Verbindung des mindestens einen Bauelements mit dem Spannelement oder einem anderen Bauelement bewirkt wird. Die Erfindung richtet sich insbesondere auf das Verbinden von längserstreckten, drahtförmigen Bauelementen wie Profilen und Rohren, auch mit kleinen Durchmessern im Bereich weniger Millimeter oder kleiner. Unter Verbindung wird dabei ein Anschluß eines Spannelements an ein zu verbindendes Bauelement oder das Verbinden von zwei oder mehr Bauelementen untereinander verstanden. Insbesondere richtet sich die Erfindung auf das mechanische Verbinden von Bauelementen, die aus einem schlecht schweiß- oder lötbaren Material bestehen, zum Beispiel aus einer Nickel-Titan-Legierung.

In vielen Bereichen der Technik besteht das Erfordernis, Bauelemente mechanisch zu verbinden, wobei auch solche Verbindungen gewünscht sind, die sich erforderlichenfalls wieder lösen lassen. Eine gebräuchliche Methode besteht darin, ein elastisch verformbares Spannelement zu verwenden, das im elastisch verformten Zustand eine Haltekraft auf ein zu verbindendes Bauelement ausübt und die Haltekraft eine kraftschlüssige Verbindung des Bauelements mit dem Spannelement oder einem anderen Bauelement bewirkt. Dabei gibt es prinzipiell zwei Möglichkeiten, das Spannelement elastisch zu verformen.

Die erste Variante besteht darin, das Spannelement aus einer entspannten Ausgangslage mittels einer elastischen Verformung in eine vorgespannte Lage zu bringen, in der es verformt und elastisch gedehnt ist. In der vorgespannten Lage kann dann das mindestens eine zu verbindende Bauelement in das Spannelement eingesetzt werden (oder gegebenenfalls umgekehrt das Spannelement in das Bauelement). Anschließend läßt man das Spannelement in eine weniger gespannte Lage zurückkehren, in der es eine von der elastischen Verformung ausgehende Haltekraft auf das verbundene Bauelement ausübt, durch die die kraftschlüssige Verbindung bewirkt wird.

Die zweite Möglichkeit besteht darin, das Spannelement aus einer entspannten Ausgangslage in eine gespannte Lage zu bringen, in der die von der Dehnung erzeugte mechanische Spannung die Haltekraft erzeugt. Dabei kann das Spannelement gegebenenfalls vor dem Einführen des zu verbindenden Bauelements in einer entgegengesetzten Richtung vorgespannt werden.

So ist es beispielsweise im Stand der Technik bekannt, Sechskant-Stiftschlüssel an ihrem Ende mit gewickelten Federn aus Stahl zu versehen, die derart um das Schlüsselende gewickelt sind, daß aufgrund der Federspannung die Feder den Stift kraftschlüssig einspannt, so daß der Schlüssel mittels der Feder an einem Schlüsselbund befestigt werden kann. Die Feder kann gemäß der ersten beschriebenen Variante dabei zum Einführen des Schlüssels geweitet werden und übt in einer teilentspannten Lage die Haltekraft aus. Andererseits kann die Feder aber auch gemäß der zweiten beschriebenen Variante, die gewisse Ähnlichkeiten zum Crimpen aufweist, auf den Schlüssel aufgesetzt und den Durchmesser verkleinernd zusammengezogen werden; auch dabei bildet sich durch die Umwicklung des Schlüsselendes eine Haltekraft aus.

Ein anderes aus dem Stand der Technik bekanntes Beispiel sind schrumpfende Verbindungsmuffen zur Verbindung zweier stirnseitig aneinander stoßender Rohre, z.B. gemäß der Literaturstelle Engineering Aspects of Shape Memory Alloys, Duerig, Melton, Stöckel, Wayman, Verlag Butterworh-Heinemann Ltd., 1990 oder gemäß DE 4026644 C1. Dabei wird eine Formgedächtnislegierung mit einem unterdrückten Formgedächtniseffekt in Form einer Muffe um die Verbindungsstelle gelegt und geschrumpft. Der gesamte nutzbare Schrumpfeffekt beträgt nach Abzug des Montagespiels, der Substrattoleranz, der Substratverformung beim Schrumpfen und des unterdrückten Formgedächtniseffekts insgesamt etwa drei bis vier Prozent, so daß die Toleranzen genau eingehalten werden müssen, um eine zuverlässige Verbindung herzustellen. Diesen Schrumpfverbindungen liegt der Einwegeffekt zugrunde, was bedeutet, daß die Verbindungen nicht mehr lösbar sind. Der beim Schrumpfvorgang zum Verbinden ausgenutzte Effekt beruht auf einer Phasenumwandlung, bei der sich das Gefüge des Materials der Schrumpfmuffe ändert.

Aus dem Dokument WO 96/27744 ist ein elastisches Verbindungselement für Brillenfassungen bekannt, bei dem eine aus einem Ni-Ti-Material gefertigte Klemmscheibe auf einen Schaft aufgepreßt wird. Durch die elastische Klemmkraft wird die Klemmscheibe auf dem Schaft gehalten and stellt eine mechanische Verbindung her.

Der Erfindung liegt unter Berücksichtigung dieses Standes der Technik die Aufgabe zugrunde, ein Verbindungselement zum mechanischen Verbinden von Bauelementen zu schaffen, das größere Toleranzen und Maßabweichungen bei dem Spannelement und/oder den Bauelementen zuläßt und dennoch eine hohe Haltekraft erzeugt. Die Festigkeit der Verbindung und die erzeugte Haltekraft soll groß sein. Ferner ist es wünschenswert, wenn die hergestellte Verbindung bei Bedarf wieder lösbar ist.

Die erfindungsgemäße Lösung ist Gegenstand des Anspruchs 1. Bei diesem Verbindungselement zum mechanischen Verbinden von Bauelementen mit einem elastisch verformbaren Spannelement, das im elastisch verformten Zustand eine Haltekraft auf mindestens ein verbundenes Bauelement ausübt, durch die eine kraftschlüssige Verbindung des mindestens einen Bauelements mit dem Spannelement oder einem anderen Bauelement bewirkt wird, umfaßt das Spannelement einen Federwerkstoff aus einer superelastischen Formgedächtnislegierung, insbesondere einer Nickel-Titan-Legierung, der in dem Spannelement elastisch (rein elastisch, superelastisch) gedehnt ist.

Bei Legierungen, die annähernd gleich viele Titan- und Nickel-Atome enthalten, sind besondere Effekte zu beobachten, aufgrund derer solche Legierungen auch Formgedächtnis-Legierungen genannt werden. Die Effekte beruhen auf einer thermoelastischen martensitischen Phasenumwandlung, d.h. einer temperaturabhängigen Änderung der Kristallstruktur: bei hohen Temperaturen ist die Legierung austenitisch, bei niedrigen Temperaturen dagegen martensitisch. Nach T. W. Duerig und H. R. Pelton, ("TI-NI Shape Memory Alloys", in: Materials Properties Handbook: Titanium Alloys, 1994, S. 1035-1048, ASM International 1994) sind bei Formgedächtnis-Legierungen zwei Eigenschaften zu unterscheiden. Legierungen mit einem Titangehalt zwischen 49,7 bis 50,7 Atom% zeigen ein thermisches Formgedächtnis, auch Shape-Memory genannt, Legierungen mit einem Titangehalt von 49,0 bis 49,4 Atom% ein mechanisches Formgedächtnis, auch Superelastizität genannt. Nicht nur binäre Nickel-Titan-Legierungen können die genannten Eigenschaften haben. Eine Formgedächtnis-Legierung kann ternäre Bestandteile (z.B. Eisen, Chrom oder Aluminium) enthalten. Das Verhältnis von Nickel und Titan sowie die Anwesenheit ternärer Beimengungen haben großen Einfluß auf die Ausprägung des thermischen und mechanischen Formgedächtnisses.

Um für Bauelemente wie beispielsweise die oben beschriebenen Schrumpfmuffen das thermische Formgedächtnis zu nutzen, wird eine Legierung mit geeigneter Zusammensetzung durch Abkühlen diffusionslos vom austenitischen Gefüge in das martensitische Gefüge umgewandelt. Eine anschließende Verformung eines aus dieser Legierung gefertigten Bauteiles kann durch eine thermische Behandlung des Bauelementes (Erwärmen auf Temperaturen oberhalb einer bestimmten Umwandlungstemperatur) wieder rückgängig gemacht werden. Dabei wird das ursprüngliche austenitische Gefüge wieder eingestellt, und das Bauteil nimmt seine ursprüngliche Gestalt an. Als Umwandlungstemperatur wird im allgemeinen die Temperatur bezeichnet, bei der der Martensit vollständig in Austenit umgewandelt ist. Die Umwandlungstemperatur ist stark von der Zusammensetzung der Legierung und in dem Bauteil herrschenden Spannungen abhängig. Bauelemente, die ein thermisches Formgedächtnis zeigen, können Bewegungen erzeugen und/oder Kräfte ausüben.

Der mechanische Formgedächtniseffekt tritt bei einem Bauelement aus einer geeigneten Legierung mit austenitischem Gefüge ein, wenn das Bauelement in einem bestimmten Temperaturbereich verformt wird. Dabei ist es für das austenitische Gefüge energetisch günstiger, sich spannungsinduziert in Martensit umzuwandeln, wobei elastische Dehnungen von bis zu zehn Prozent erreicht werden können. Bei Entlastung kehrt das Gefüge wieder in die austenitische Phase zurück. Bauelemente aus einer derartigen Legierung werden daher zum Speichern von Deformationsenergie verwendet.

Legierungen, die die oben beschriebenen Eigenschaften zeigen, sind unter den Begriffen Nickel-Titan, Titan-Nickel, Tee-nee, Memorite^{R}, Nitinol, Tinel^{R}, Flexon^{R}, Euroflex^{R} und Shape-Memory-Alloys bekannt. Dabei beziehen sich diese Begriffe nicht auf eine einzelne Legierung mit einer bestimmten Zusammensetzung, sondern auf eine Familie von Legierungen, die die beschriebenen Eigenschaften zeigen.

In vielen technischen Gebieten, z.B. der Medizintechnik und der Feinmechanik, besteht aufgrund der besonderen Eigenschaften von Nickel-Titan-Legierungen ein großes Interesse, aus Formgedächtnis-Legierungen gefertigte Bauelemente einzusetzen, auch in Form von Rohren, insbesondere mit kleinem Außendurchmesser. In der Mechanik können sie beispielsweise für Schalt-, Stellelemente oder Ventile benutzt werden. Auch in der Medizintechnik werden Formgedächtnis-Legierungen in zunehmendem Maße verwendet, da Bauteile aus derartigen Legierungen körperverträglich und ermüdungsfest sind und im Falle von superelastischen Legierungen auch eine hohe Knickfestigkeit zeigen. Beispiele für den Einsatz von Nickel-Titan-Legierungen in der Medizintechnik sind Führungsdrähte für Katheter, Gefäßstützen (Stents) sowie endoskopische und laparoskopische Instrumente für die minimalinvasive Diagnose und Therapie.

Die besondere Eigenschaft superelastischer Formgedächtnislegierungen, die darin besteht, daß sie eine elastische Dehnung erfahren können, die bis zu zehn Prozent beträgt und somit erheblich größer als bei Federwerkstoffen aus Stahl oder Bronze der Fall ist, wird im Rahmen der Erfindung ausgenutzt, um aus einem solchen Federwerkstoff hergestellte Spannelemente einzusetzen, die elastisch gedehnt sind. Da der elastische Dehnungsbereich gegenüber einem Federstahl bis zu zehnmal größer ist, können bei erfindungsgemäßen Spannelementen die Toleranzen größer bemessen sein.

Der nutzbare Effekt ist bei dem erfindungsgemäßen Spannelement etwa um den Faktor drei gegenüber einer weiter oben erläuterten Schrumpfmuffe aus einer Formgedächtnislegierung vergrößert. Eine solche Schrumpfmuffe liegt bei der Montage im martensitischen Zustand vor und wandelt sich bei Temperaturerhöhung in die austenitische Form um. Dabei versucht die Schrumpmuffe, die ursprünglich eingestellte, kleinere Form einzunehmen, wodurch die Haltekraft aufgebaut wird.

Das erfindungsgemäße Spannelement liegt bei Beginn der Montage bereits im austenitischen Zustand vor und wandelt sich beim elastischen Spannen bzw. Dehnen in den spannungsinduzierten, martensitischen Zustand um. Der nutzbare Effekt kann durch geometrische Gestaltung des Spannelements um ca. den Faktor drei gegenüber der bekannten Schrumpfmuffe vergrößert sein. Bei einem erfindungsgemäßen Spannelement treten bevorzugt keine Längungs-, d.h. Schrumpfungseffekte zur Erzeugung der Haltekraft auf, sondern nur Biegekräfte bzw. Scherkräfte.

Die folgenden Ausführungsbeispiele der Erfindung lassen weitere vorteilhafte Merkmale und Besonderheiten erkennen, die anhand der teilweise schematischen Darstellung in den Zeichnungen im folgenden näher beschrieben und erläutert werden. Es zeigen
- Fig. 1: ein erfindungsgemäßes Spannelement in Form einer Druckfeder,
- Fig. 2: eine Druckfeder bei der Montage,
- Fig. 3: ein erfindungsgemäßes Verbindungselement mit einer Druckfeder,
- Fig. 4: ein erfindungsgemäßes Spannelement in Form einer Zugfeder,
- Fig. 5: eine Zugfeder bei der Montage,
- Fig. 6: ein erfindungsgemäßes Verbindungselement mit einer Zugfeder,
- Fig. 7: ein erfindungsgemäßes Verbindungselement mit einer Feder und einem Fugenelement,
- Fig. 8: ein erfindungsgemäßes Spannelement in Form einer Schenkelfeder,
- Fig. 9: eine Schenkelfeder bei der Montage,
- Fig. 10: ein erstes erfindungsgemäßes Verbindungselement mit einer Schenkelfeder,
- Fig. 11: ein zweites erfindungsgemäßes Verbindungselement mit einer Schenkelfeder,
- Fig. 12: ein erstes erfindungsgemäßes Verbindungselement in Form einer Spannhülse,
- Fig. 13: eine vorgespannte Spannhülse zu Fig. 12,
- Fig. 14: einen Querschnitt eines ersten erfindungsgemäßen Verbindungselements mit einer Spannhülse,
- Fig. 15: einen Längsschnitt zu Fig. 14,
- Fig. 16: ein erstes erfindungsgemäßes Verbindungselement mit Schenkelfeder und Spannhülse,
- Fig. 17: ein zweites erfindungsgemäßes Verbindungselement mit Schenkelfeder und Spannhülse,
- Fig. 18: ein zweites erfindungsgemäßes Verbindungselement in Form einer Spannhülse,
- Fig. 19: eine vorgespannte Spannhülse zu Fig. 18,
- Fig. 20: einen Querschnitt eines zweiten erfindungsgemäßen Verbindungselements mit einer Spannhülse,
- Fig. 21: einen Längsschnitt zu Fig. 20,
- Fig. 22: ein drittes erfindungsgemäßes Verbindungselement in Form einer Spannhülse,
- Fig. 23: eine vorgespannte Spannhülse zu Fig. 22,
- Fig. 24: einen Querschnitt eines dritten erfindungsgemäßen Verbindungselements mit einer Spannhülse,
- Fig. 25: einen Längsschnitt zu Fig. 24,
- Fig. 26: ein viertes erfindungsgemäßes Verbindungselement in Form einer Spannhülse,
- Fig. 27: eine vorgespannte Spannhülse zu Fig. 27,
- Fig. 28: einen Querschnitt eines vierten erfindungsgemäßen Verbindungselements mit einer Spannhülse,
- Fig. 29: einen Längsschnitt zu Fig. 28,
- Fig. 30: ein fünftes erfindungsgemäßes Verbindungselement in Form einer Spannhülse,
- Fig. 31: eine vorgespannte Spannhülse zu Fig. 30,
- Fig. 32: einen Querschnitt eines fünften erfindungsgemäßen Verbindungselements mit einer Spannhülse und
- Fig. 33: einen Längsschnitt zu Fig. 32.

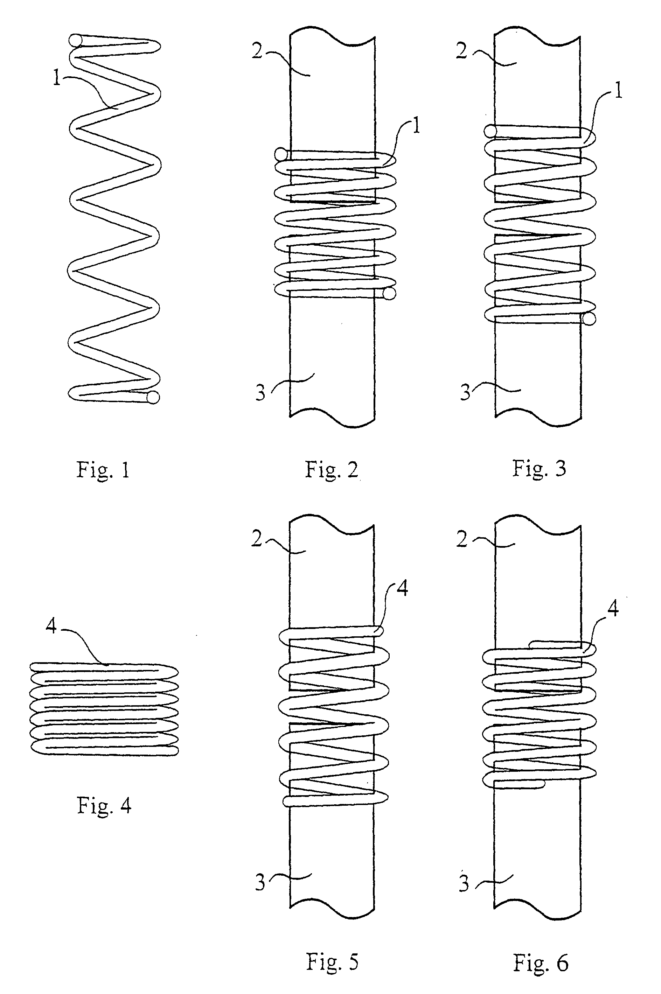

Die Figuren 1 bis 6 zeigen Seitenansichten erfindungsgemäßer Verbindungslemente, bei denen das Spannelement eine schraubenförmig gewundene Feder 1, 4, 7 umfaßt, in die in axialer Richtung mindestens ein zu verbindendes Bauelement 2 eingesetzt ist. Dabei kann die Feder zum Einsetzen des mindestens einen Bauelements elastisch verformt und vorgespannt und zum Bewirken der Verbindung teilentspannt werden, oder die Feder wird zur Bewirkung der Verbindung gespannt. Ferner kann vorgesehen sein, daß beim Einsetzen des mindestens einen Bauelements die Windungen der Feder zur Vergrößerung des Durchmessers ihrer Windungen etwas aufgedreht werden.

In den Figuren 1 bis 3 ist das Spannelement eine Druckfeder 1. In Fig. 1 ist sie im entspannten Zustand dargestellt. Sie besteht aus einer Formgedächtnislegierung mit superelastischen Eigenschaften. Um zwei oder mehrere drahtförmige Bauelemente 2, 3 stirnseitig miteinander zu verbinden, wird die Druckfeder 1 beim Einsetzen der Bauelemente 2, 3 in axialer Richtung zusammengedrückt und vorgespannt. Dadurch vergrößert sich ihr Durchmesser, so daß die zu verbindenden Teile, wie in Fig. 2 dargestellt, eingeschoben werden können. Die Bauelemente 2, 3 werden auf ihren Stirnseiten zusammengepreßt, was in den Figuren der Übersichtlichkeit halber nicht dargestellt ist.

Die Druckfeder 1 wird dann, wie in Fig. 3 dargestellt ist, teilentspannt, wobei sie sich wieder in Längsrichtung ausdehnt und anstrebt, ihren ursprünglichen, kleineren Durchmesser zu erreichen. Dies wird zum Teil verhindert, da der Durchmesser der zu verbindenden Bauelemente 2, 3 größer als der ursprüngliche und jetzt angestrebte Innendurchmesser der Druckfeder 1 ist. Durch diese Teilentspannung entsteht ein Anpreßdruck der jetzt eng anliegenden Druckfeder 1 auf die zu fügenden Bauelemente 2, 3, der die gewünschten Haltekräfte der Fügeverbindung bewirkt. Die stirnseitig verbundenen Bauelemente 2, 3 sind in Fig. 3 aus Gründen der besseren Darstellbarkeit mit einem Abstand gezeichnet. Zum Lösen der Verbindung kann die Druckfeder 1 erforderlichenfalls wieder in eine Lage gemäß Fig. 2 zusammengedrückt werden, so daß die Bauelemente 2, 3 herausgezogen werden können.

Die Figuren 4 bis 6 zeigen eine Verbindung zweier Bauelemente 2, 3, die mittels einer in Fig. 4 im entlasteten Zustand dargestellten Zugfeder 4 aus einem superelastischen Formgedächtnismaterial bewirkt wird. Die Zugfeder 4 ist vorzugsweise auf Block, d.h. Windung an Windung gewickelt. Ihre Windungen werden zum Einsetzen der zwei oder mehrerer Bauelemente 2, 3 etwas aufgedreht, so daß sich der Durchmesser ihrer Windungen vergrößert, und in axialer Richtung auseinandergezogen. Die Bauelemente 2, 3 werden, was der Übersichtlichkeit halber in Fig. 5 nicht dargestellt ist, mit ihren Stirnseiten zusammengeschoben, und die Zugfeder 4 wird teilentspannt. Sie nimmt dann eine Lage gemäß Fig. 6 ein, in der sowohl ihr Durchmesser als auch ihre Länge gegenüber der in Fig. 4 dargestellten Ausgangslage vergrößert und gegenüber der Lage gemäß Fig. 5 verkleinert sind. Hierbei entsteht ein Anpreßdruck auf die eingesetzten Bauelemente 2, 3, der die gewünschten Haltekräfte der Fügeverbindung bewirkt.

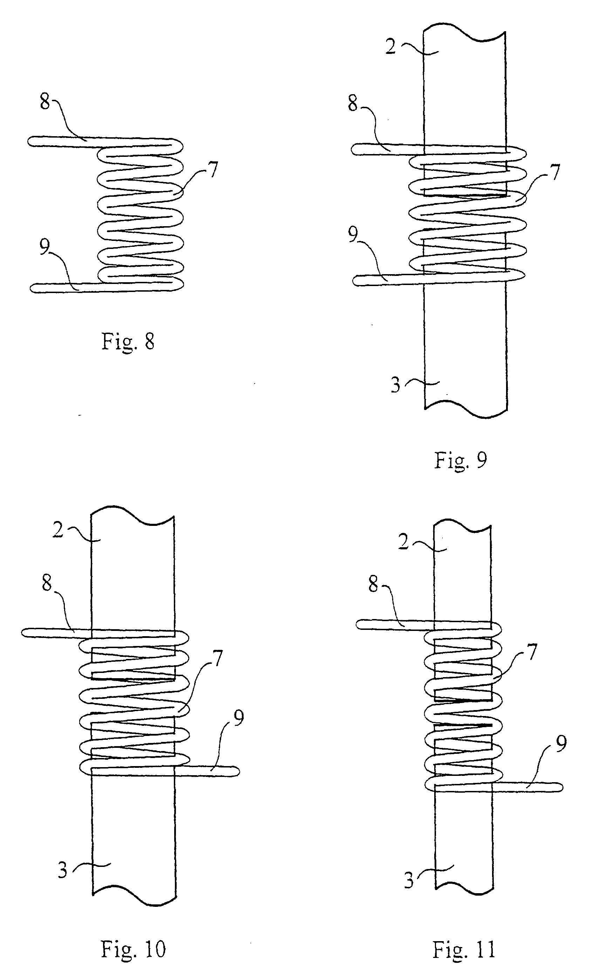

In Fig. 7 ist ein Querschnitt durch ein erfindungsgemäßes Verbindungselement mit einer Feder, die eine Druckfeder 1, eine Zugfeder 4 oder eine weiter unten beschriebene Schenkelfeder 7 sein kann, dargestellt. In sie sind zwei oder mehrere stirnseitig aneinander gefügte Bauelemente 2, 3 eingesetzt, die durch die Feder verbunden werden. Die zwei Bauelemente 2, 3 stoßen im Bereich der Feder 1, 4, 7 stirnseitig aneinander oder sind stirnseitig zueinander orientiert. Die Bauelemente 2, 3 sind vorzugsweise stab- bzw. rohrförmig ausgebildet und haben vorzugsweise einen runden Querschnitt. Andere, z.B. rechteckige oder quadratische Querschnitte sind aber ebenfalls möglich.

Alternativ ist es auch möglich, daß die Feder 1, 4, 7 nicht um zwei aneinander gefügte Bauelemente 2, 3, sondern um einen einstückigen Kern gewickelt ist, also in die Feder nur ein zu verbindendes Bauelement eingesetzt ist. Das eingesetzte Bauelement kann dann mittels der Feder, beispielsweise eines Schenkels der Feder, mit einem anderen Teil verbunden werden.

Ein weiteres vorteilhaftes Merkmal, das in Fig. 7 dargestellt ist, kann darin bestehen, daß die zwei oder mehrere Bauelemente 2, 3 im Bereich ihrer Verbindungsstelle von einem Fugenelement, beispielsweise einem dünnwandigen Fugenrohr 5 oder mehreren Fugenschalen, umgeben sind, das die Haltekraft von der Feder auf die zu verbindenden Bauelemente 2, 3 überträgt.

Wenn die Oberflächen der zu verbindenden Bauelemente 2, 3 bzw. eines einstückigen Kerns sehr glatt sind, kann es vorteilhaft sein, wenn die Haltekräfte dadurch verstärkt werden, daß ein im Eingriff mit dem Spannelement, d.h. der Feder stehender Abschnitt 6 des mindestens einen in die Feder eingesetzten und zu verbindenden Bauelements reibungserhöhend ausgebildet ist, beispielsweise durch Aufrauhen, Strukturieren oder Beschichten. In besonderen Ausführungsformen kann auch vorgesehen sein, daß zwei oder mehrere zu verbindende Bauelemente 2, 3 in der Feder in einem Abschnitt 6 parallel nebeneinander angeordnet sind.

In den Figuren 8 bis 11 sind Ausführungsformen erfindungsgemäßer Verbindungselemente dargestellt, bei denen das Spannelement eine in Fig. 8 im entspannten Zustand dargestellte Schenkelfeder 7 mit zwei Schenkeln 8, 9 ist, die aus einer superelastischen Formgedächtnislegierung besteht. Sie kann in einer zu den oben beschriebenen Druckfedern 1 und Zugfedern 4 entsprechenden Weise verwendet werden, wobei auch die anhand von Fig. 7 weiter erläuterten Besonderheiten, beispielsweise einstückige Kerne, Fugenelemente und reibungserhöhende Ausbildungen möglich sind.

Gemäß einer ersten Variante, die in den Figuren 9 und 10 dargestellt ist, werden die Schenkel 8, 9 der Schenkelfeder 7 beim Einsetzen des mindestens einen Bauelements 2, 3 zur Vergrößerung des Durchmessers ihrer Windungen und zum Vorspannen der Schenkelfeder 7 entgegen der Wickelrichtung der Schenkelfeder 7 aufgeboben. Die Schenkel 8, 9 der Schenkelfeder 7 sind dann um einen bestimmten Versetzwinkel gegeneinander versetzt. Nachdem die zu verbindenden Bauelemente 2, 3 in die Schenkelfeder 7 eingeführt sind, wird die Schenkelfeder 7 zum Bewirken der Verbindung teilentspannt und nimmt eine Lage gemäß Fig. 10 ein. Dabei verringert sich der Durchmesser ihrer Windungen und es bildet sich die gewünschte Haltekraft auf die eingesetzten Bauelemente 2, 3 aus.

Alternativ ist es auch möglich, ausgehend von der entspannten Lage der Schenkelfeder 7 gemäß Figur 8 oder ausgehend von der vorgespannten Lage der Schenkelfeder 7 gemäß Fig. 9 die Schenkel 8, 9 der Schenkelfeder 7, nachdem die zu verbindenden Bauelemente 2, 3 in die Schenkelfeder 7 eingeführt sind, zur Verkleinerung des Durchmessers ihrer Windungen für das Bewirken der Verbindung in Wickelrichtung der Schenkelfeder über den entspannten Zustand hinaus zusammenzubiegen. Dabei spannt sich die Schenkelfeder 7 und verringert ihre Steigung, was bis zur Blockbildung durchgeführt werden kann, und ihren Durchmesser.

Die Durchmesserverringerung wird jedoch zum Teil durch die eingesetzten Bauelemente 2, 3 verhindert, sobald der Innendurchmesser der Schenkelfeder 7 auf den zu fügenden Teilen anliegt. Hierdurch entsteht ein Anpreßdruck, der die gewünschten Haltekräfte der Fügeverbindung bewirkt. Je nachdem, ob die Schenkelfeder 7 in einem Zwischenschritt gemäß Fig. 9 aufgebogen wird oder nicht, sind Bauelemente 2, 3 mit einem größeren oder kleineren Durchmesser als dem Windungsdurchmesser in die Schenkelfeder 7 einsetzbar.

Bei der in Fig. 11 dargestellten Variante wurden Bauelemente 2, 3, die im Durchmesser kleiner als die Schenkelfeder 7 sind, in einem Ausgangszustand gemäß Fig. 8 eingesetzt, und die Schenkel 8, 9 wurden in Wickelrichtung der Feder zusammengebogen. Dabei werden die Schenkel 8, 9 bevorzugt bis zu einer Orientierung zusammengebogen, in der sie in gleicher Richtung stehen. Es ist dann einfacher, die Schenkel 8, 9 zueinander zu fixieren, um dadurch die Aufrechterhaltung der Federspannung zu sichern.

Hierzu können die Schenkel 8, 9 beispielsweise nebeneinander liegen und mit einem Abschnitt aus einem Federrohr, der über die Schenkelenden 8, 9 geschoben ist und vorzugsweise aus einem superelastischen Formgedächtnismaterial besteht und somit einer nachfolgend beschriebenen Spannhülse 10 entspricht, zusammengehalten werden. Gleichzeitig können bei Bedarf in das andere Ende der Hülse, mittels der die gespannten Schenkel 8, 9 der Schenkelfeder 7 fixiert werden, ein oder mehrere weitere Teile eingeführt und ebenfalls verbunden werden.

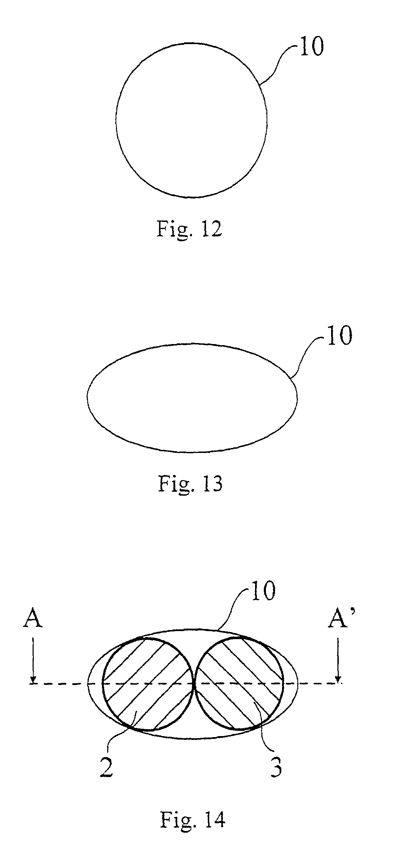

Die Figuren 12 bis 15 veranschaulichen ein erstes erfindungsgemäßes Verbindungselement, bei dem das Spannelement eine Spannhülse 10 aus einem superelastischen Formgedächtnismaterial umfaßt. Ein Querschnitt durch die Spannhülse 10 ist in Fig. 12 dargestellt. Sie weist im entspannten Zustand vorzugsweise einen runden Querschnitt und im vorgespannten Zustand gemäß Fig. 13 und im teilentspannten Zustand gemäß Fig. 14 einen ovalen Querschnitt auf.

Zum Einführen der zu verbindenden Bauelemente 2, 3 in axialer Richtung in die Spannhülse 10 wird diese aus der in Fig. 12 dargestellten Position durch Zusammendrücken in die ovale Form gemäß Fig. 13 gebracht. Dabei wird sie elastisch verformt und vorgespannt. In diesem Zustand werden, wie in dem Querschnitt gemäß Fig. 14 dargestellt ist, die beiden zu verbindenden Bauelemente 2, 3 eingeführt und danach wird die Spannhülse 10 entlastet.

Durch die Entlastung wird die Spannhülse 10 teilentspannt und strebt an, ihren ursprünglichen, runden Ausgangszustand einzunehmen. Dies wird jedoch teilweise verhindert, da die eingesetzten Bauelemente 2, 3 zusammen ein größeres Maß ergeben als der ursprüngliche Innendurchmesser der Spannhülse 10. Hierdurch wird eine Kraft aufgebaut, die die zu verbindenden Bauelemente 2, 3 aneinanderpreßt und zuverlässig verbindet. Zum Lösen der Verbindung kann die Spannhülse 10 wieder in eine Form gemäß Fig. 13 zusammengedrückt und in die vorgespannte Lage gebracht werden, so daß die Bauelemente 2, 3 herausgezogen werden können.

Gegenüber einem konventionellen Federstahl oder einer Federbronze, die maximal um 0,5% elastisch gedehnt werden können, bietet die erfindungsgemäße Spannhülse 10 aus einer superelastischen Formgedächtnislegierung den Vorteil, daß sie bis zu 8% oder mehr elastisch gedehnt werden kann. Es ist daher möglich, größere Toleranzen zuzulassen, wobei beispielsweise die Hälfte des nutzbaren Dehnungsbereichs für die Fertigungstoleranzen und die andere Hälfte für die Aufrechterhaltung der elastischen Verformung und das Bewirken der Haltekräfte genutzt werden kann.

Auch gegenüber bekannten Schrumpfhülsen aus Formgedächtnislegierungen, die für Schrumpfverbindungen eingesetzt werden, bieten die erfindungsgemäßen Spannhülsen 10 erhebliche Vorteile, da größere Toleranzen und Maßabweichungen zugelassen werden können, ohne die Funktion zu beeinträchtigen. So kann zum Beispiel eine vorgedehnte Schrumpfhülse von einem Innendurchmesser von 0,80 mm maximal auf einen Innendurchmesser von 0,76 mm geschrumpft werden. Ein runder, superelastischer Rohrabschnitt einer Spannhülse 10 kann dagegen von einem Innendurchmesser von 0,80 mm bis auf einen Innendurchmesser von 0,47 mm zusammengedrückt werden, ohne daß eine bleibende Formänderung des vorgespannten Rohrs eintritt. Die Haltekräfte werden dabei durch elastische Verformungen, Biegekräfte und Dehnungen erzeugt.

In dem Ausführungsbeispiel gemäß den Figuren 12 bis 14 beträgt der Außendurchmesser der Spannhülse 10 im Ausgangszustand gemäß Fig. 12 1,00 mm und der Innendurchmesser 0,82 mm. In der vorgespannten Lage gemäß Fig. 13 beträgt ihr großer Außendurchmesser 1,62 mm, der große Innendurchmesser 1,44 mm, der kleine Außendurchmesser 0,64 mm und der kleine Innendurchmesser 0,46 mm. Der Durchmesser der beiden Bauelemente 2, 3 beträgt jeweils 0,45 mm, so daß in der teilentspannten Lage gemäß Fig. 14 die Spannhülse 10 folgende Abmessungen aufweist: großer Außendurchmesser 1,10 mm, großer Innendurchmesser 0,92 mm, kleiner Außendurchmesser 0,90 mm und kleiner Innendurchmesser 0,72 mm.

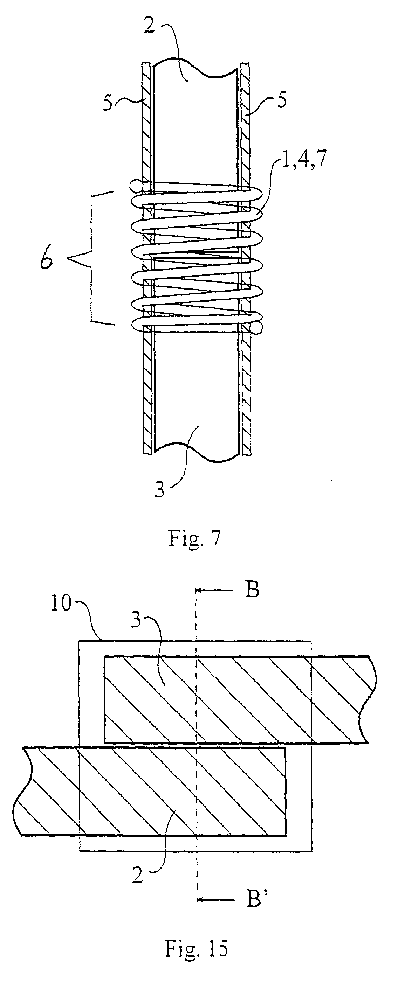

Fig. 15 zeigt einen Schnitt A - A' gemäß Fig. 14. Der Schnitt B - B' entspricht der Darstellung von Fig. 14. Man erkennt, daß in die rohrförmige Spannhülse 10 die zu verbindenden Bauelemente 2, 3 eingesetzt sind, die in der Spannhülse 10 in einem Abschnitt parallel nebeneinander angeordnet sind. Alternativ können auch mehr als zwei zu verbindende Bauelemente in die Spannhülse 10 eingeführt werden. Ferner sind Ausführungsformen möglich, bei denen in die Spannhülse 10 zwei oder mehrere zu verbindende Bauelemente 2, 3 eingesetzt sind, die in der Spannhülse 10 stirnseitig aneinanderstoßen oder stirnseitig zueinander orientiert sind.

Die jeweiligen Enden der verbundenen Bauelemente 2, 3 können, wie in Fig. 15 dargestellt, im Innern der Spannhülse 10 liegen oder auch aus der Spannhülse 10 herausragen. Die von der Spannhülse 10 erzeugte Haltekraft wird durch die mechanischen Werkstoffeigenschaften, die Abmessungen, die geometrischen Verhältnisse und die Oberflächenbeschaffenheiten bestimmt. Wenn die Spannhülse 10 eine entsprechende Länge aufweist, kann mit ihr eine Zugfestigkeit der Verbindung erreicht werden, die höher ist als diejenige der verbundenen Bauelemente 2, 3.

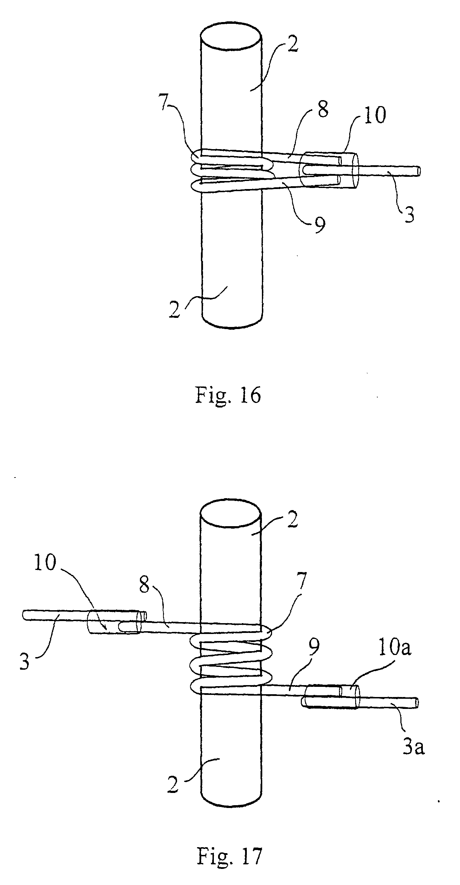

Die Fig. 16 zeigt ein Verbindungselement, das die Funktion einer T-Abzweigung erfüllt. Um ein Bauelement 2 ist eine Schenkelfeder 7 gewickelt, deren Schenkel 8, 9 durch eine Spannhülse 10 fixiert sind. Auf diese Weise wird eine feste Verbindung zwischen der Schenkelfeder 7 und dem Bauelement 2 bewirkt. In die Spannhülse 10 ist ferner ein weiteres Bauelement 3 eingeführt und zusammen mit den Schenkeln 8, 9 befestigt. Es wird zusammen mit den Schenkeln 8, 9 von der Spannhülse 10 mittels elastischer Verformungskräfte gehalten.

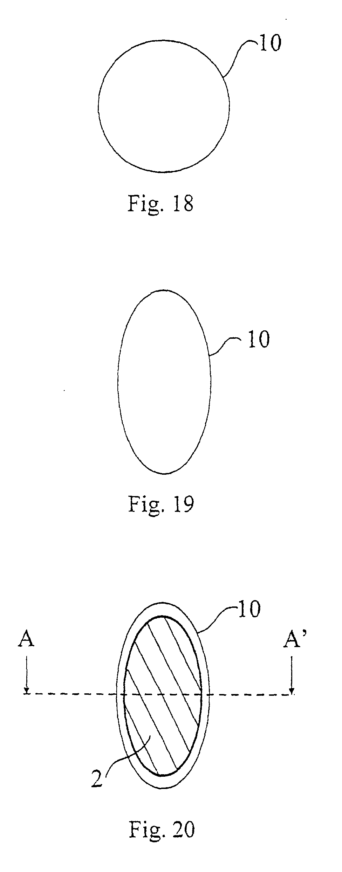

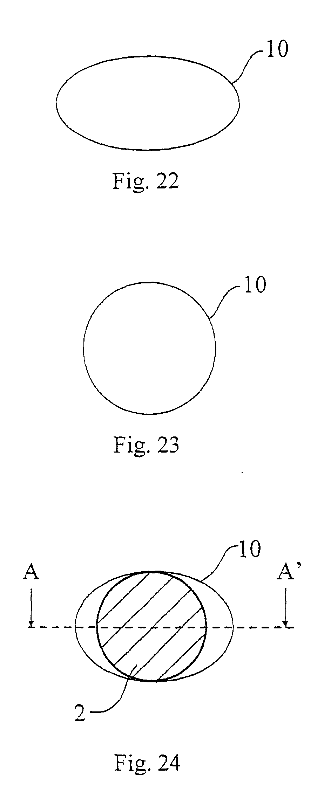

In Fig. 17 ist eine Schenkelfeder 7 um ein Bauelement 2 gewickelt und mit diesem beispielsweise gemäß der in den Figuren 10 und 11 beschriebenen Weise verbunden. Der eine Schenkel 8 ist mittels einer Spannhülse 10 mit einem weiteren Bauelement 3 verbunden, und der andere Schenkel 9 ist mittels einer anderen Spannhülse 10a mit einem weiteren Bauelement 3a verbunden. Auf diese Weise können beispielsweise Kreuzverbindungen realisiert werden.

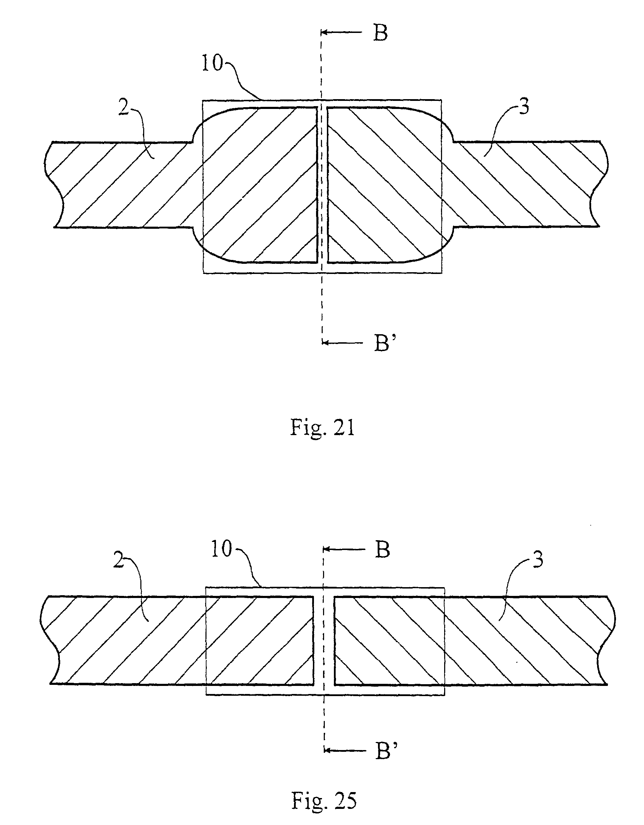

Die Figuren 18 bis 21 entsprechen den Figuren 12 bis 15 und veranschaulichen ein zweites erfindungsgemäßes Verbindungselement, bei dem in die Spannhülse 10 zwei oder mehrere zu verbindende Bauelemente 2, 3 eingesetzt sind, die in der Spannhülse 10 stirnseitig aneinanderstoßen bzw. stirnseitig zueinander orientiert sind. Die Spannhülse 10 kann im entspannten Zustand (Fig. 18) einen runden Querschnitt und im vorgespannten Zustand (Fig. 19) und im teilentspannten Zustand (Fig. 20) einen ovalen Querschnitt aufweisen. Der Querschnitt der zu verbindenden Teile ist in diesem Beispiel oval.

Die Figuren 22 bis 25 entsprechen den Figuren 12 bis 15 und veranschaulichen ein drittes erfindungsgemäßes Verbindungselement, bei dem in die Spannhülse 10 zwei stirnseitig zueinander orientierte Bauelemente 2, 3 eingesetzt sind. Die Spannhülse 10 kann im entspannten Zustand (Fig. 22) einen ovalen Querschnitt, im vorgespannten Zustand (Fig. 23) einen gegenüber dem entspannten Zustand verformten, z.B. runden oder ovalen Querschnitt und im teilentspannten Zustand (Fig. 24) einen ovalen Querschnitt aufweisen. Der Querschnitt der zu verbindenden Bauelemente 2, 3 ist in diesem Beispiel rund.

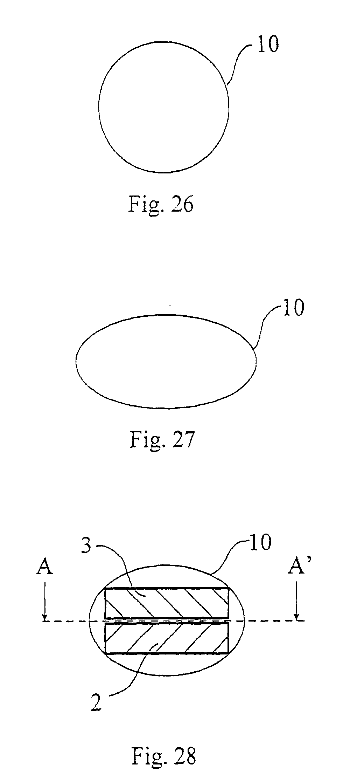

Die Figuren 26 bis 29 entsprechen den Fig. 12 bis 15 und veranschaulichen ein viertes erfindungsgemäßes Verbindungselement, bei dem in die Spannhülse 10 zwei zu verbindende Bauelemente 2, 3 eingesetzt sind, die in der Spannhülse 10 in einem Abschnitt parallel nebeneinander angeordnet sind. Die Spannhülse 10 kann im entspannten Zustand (Fig. 26) einen runden Querschnitt, im vorgespannten Zustand (Fig. 27) einen ovalen Querschnitt und im teilentspannten Zustand (Fig. 28) einen ovalen Querschnitt aufweisen. Der Querschnitt der zu verbindenden Bauelemente 2, 3 ist in diesem Beispiel rechteckig.

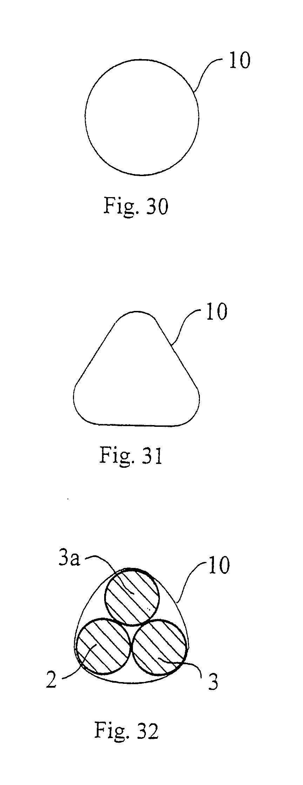

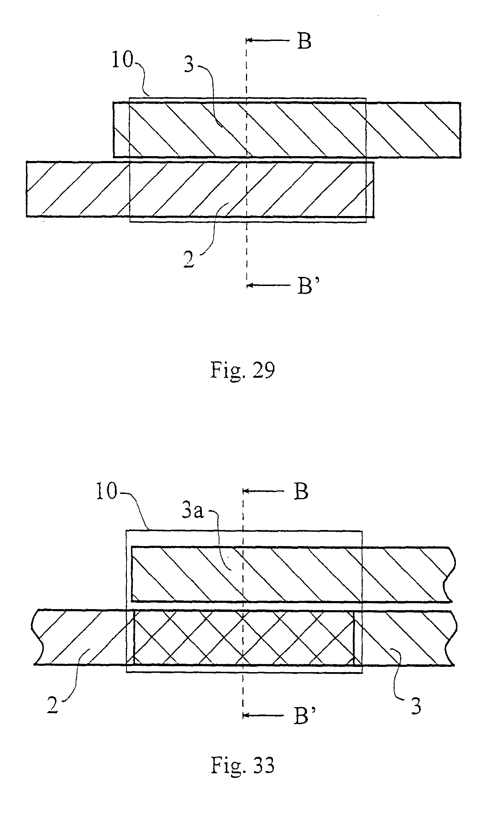

Die Figuren 30 bis 33 entsprechen den Figuren 12 bis 15 und veranschaulichen ein fünftes erfindungsgemäßes Verbindungselement, bei dem in die Spannhülse 10 drei zu verbindende Bauelemte 2, 3, 3a eingesetzt sind, die in der Spannhülse 10 in einem Abschnitt parallel nebeneinander angeordnet sind. Die Spannhülse 10 kann im entspannten Zustand (Fig. 30) einen runden oder ovalen Querschnitt, im vorgespannten Zustand (Fig. 31) einen dreiseitig in radialer Richtung verformten bzw. dreiseitig abgeflachten Querschnitt und im teilentspannten Zustand (Fig. 32) einen dreiseitig gewölbten Querschnitt aufweisen. Der Querschnitt der zu verbindenden Bauelemente 2, 3, 3a ist in diesem Beispiel rund.

### Bezugszeichenliste

- 1: Druckfeder
- 2: erstes Bauelement
- 3: zweites Bauelement
- 3a: weiteres Bauelement
- 4: Zugfeder
- 5: Fugenrohr
- 6: Abschnitt
- 7: Schenkelfeder
- 8: erster Schenkel
- 9: zweiter Schenkel
- 10: Spannhülse

## Patentansprüche

1. Verbindungselement zum mechanischen Verbinden von Bauelementen (2, 3), umfassend ein elastisch verformbares Spannelement, das im elastisch verformtem Zustand eine Haltekraft auf mindestens ein verbundenes Bauelement (2) ausübt, durch die eine kraftschlüssige Verbindung des mindestens einen Bauelements (2) mit dem Spannelement oder einem anderen Bauelement (3) bewirkt wird, wobei
das Spannelement einen Federwerkstoff aus einer superelastischen Pormgedächtnislegierung, insbesondere einer Nickel-Titan-Legierung, umfaßt, der in dem Spannelement elastisch gedehnt ist.
**dadurch gekennzeichnet, daß**
das Spannelement in axialer Richtung eine Länge aufweist und in axialer Richtung des Spannelements mindestens ein zu verbindendes Bauelement eingesetzt ist.

2. Verbindungselement nach Anspruch 1, **dadurch gekennzeichnet, daß** die Haltekraft durch bei der elastischen Dehnung des Spannelements von dem Spannelement ausgehende Biege- und/oder Scherkräfte erzeugt wird.

3. Verbindungselement nach Anspruch 1 oder 2, **dadurch gekennzeichnet, daß** das Spannelement bei der Montage durch elastisches Spannen bzw. Dehnen vom austenitischen Zustand in den spannungsinduzierten, martensitischen Zustand umgewandelt wird.

4. Verbindungselement nach einem der Ansprüche 1 bis 3, **dadurch gekennzeichnet, daß** die Haltekraft eine durch die elastische Dehnung des Spannelements verursachte Anpreßkraft ist, die von dem Spannelement auf das mindestens eine verbundene, in das Spannelement eingesetzte Bauelement ausgeübt wird.

5. Verbindungselement nach einem der Ansprüche 1 bis 4, **dadurch gekennzeichnet, daß** das Spannelement eine schraubenförmig gewundene Feder (1, 4, 7) umfaßt, in deren axialer Richtung das mindestens eine zu verbindendes Bauelement (2) eingesetzt ist.

6. Verbindungselement nach Anspruch 5, **dadurch gekennzeichnet, daß** die Feder (1, 4, 7) zum Einsetzen des mindestens einem Bauelements (2) elastisch verformt und vorgespannt und zum Bewirken der Verbindung teilentspannt wird.

7. Verbindungselement nach Anspruch 5, **dadurch gekennzeichnet, daß** die Feder (1, 4, 7) zum Bewirken der Verbindung gespannt wird.

8. Verbindungselement nach Anspruch 5 oder 6, **dadurch gekennzeichnet, daß** die Feder eine Druckfeder (1) ist, die beim Einsetzen des mindestens einen Bauelements (2) in axialer Richtung zusammengedrückt wird.

9. Verbindungselement nach Anspruch 5 oder 6, **dadurch gekennzeichnet, daß** die Feder eine Zugfeder (4) ist, die beim Einsetzen des mindestens einen Bauelements (2) in axialer Richtung auseinandergezogen wird.

10. Verbindungselement nach Anspruch 8 oder 9, **dadurch gekennzeichnet, daß** beim Einsetzen des mindestens einen Bauelements (2) die Windungen der Feder (1, 4) zur Vergrößerung des Durchmessers ihrer Windungen etwas aufgedreht werden.

11. Verbindungselement nach einem der Ansprüche 5 bis 7, **dadurch gekennzeichnet, daß** die Feder eine Schenkelfeder (7) ist.

12. Verbindungselement nach Anspruch 11, **dadurch gekennzeichnet, daß** die Schenkel (8, 9) der Schenkelfeder (7) beim Einsetzen des mindestens einen Bauelements (2) zur Vergrößerung des Durchmessers ihrer Windungen und zum Vorspannen der Schenkelfeder (7) entgegen der Wickelrichtung der Schenkelfeder (7) aufgebogen werden.

13. Verbindungselement nach Anspruch 12, **dadurch gekennzeichnet, daß** die Schenkelfeder (7) zum Bewirken der Verbindung teilentspannt wird.

14. Verbindungselement nach Anspruch 12, **dadurch gekennzeichnet, daß** die Schenkel (8, 9) der Schenkelfeder (7) zur Verkleinerung des Durchmessers ihrer Windungen für das Bewirken der Verbindung in Wickelrichtung der Schenkelfeder (7) über den entspannten Zustand hinaus zusammengebogen werden.

15. Verbindungselement nach Anspruch 11, **dadurch gekennzeichnet, daß** die Schenkelfeder (7) beim Einsetzen des mindestens einen zu verbindenden Bauelements (2) entspannt ist und die Schenkel (8, 9) der Schenkelfeder (7) zur Verkleinerung des Durchmessers ihrer Windungen und zum Erzeugen einer Spannung in der Schenkelfeder (7) für das Bewirken der Verbindung in Wickelrichtung der Schenkelfeder (7) zusammengebogen werden.

16. Verbindungselement nach einem der Ansprüche 5 bis 15, **dadurch gekennzeichnet, daß** in die Feder (1, 4, 7) ein zu verbindendes Bauelement (2) eingesetzt ist.

17. Verbindungselement nach einem der Ansprüche 5 bis 15, **dadurch gekennzeichnet, daß** in die Feder (1, 4, 7) mindestens zwei zu verbindende Bauelemente (2, 3) eingesetzt sind.

18. Verbindungselement nach Anspruch 17, **dadurch gekennzeichnet, daß** mindestens zwei Bauelemente (2, 3) stirnseitig aneinanderstoßen oder stirnseitig zueinander orientiert sind.

19. Verbindungselement nach Anspruch 18, **dadurch gekennzeichnet, daß** verbundene Bauelemente (2, 3) im Bereich ihrer Verbindungsstelle von einem Fugenelement, insbesondere einem Fugenrohr (5) oder mehreren Fugenschalen, umgeben sind, das die Haltekraft von der Feder (1, 4, 7) auf die zu verbindenden Bauelemente (2, 3) überträgt.

20. Verbindungselement nach Anspruch 17, **dadurch gekennzeichnet, daß** verbundene Bauelemente (2, 3) in der Feder (1, 4, 7) in einem Abschnitt (6) parallel nebeneinander angeordnet sind.

21. Verbindungselement nach einem der Ansprüche 1 bis 4, **dadurch gekennzeichnet, daß** das Spannelement eine Spannhülse (10) umfaßt, in deren axialer Richtung das mindestens eine zu verbindendes Bauelement (2) eingesetzt ist, wobei die Spannhülse (10) zum Einsetzen des mindestens einen Bauelements (2) durch Zusammendrücken elastisch verformt und vorgespannt und zum Bewirken der Verbindung teilentspannt wird.

22. Verbindungselement nach Anspruch 21, **dadurch gekennzeichnet, daß** die Spannhülse (10) im entspannten Zustand einen runden Querschnitt und im vorgespannten und teilentspannten Zustand einen ovalen Querschnitt aufweist.

23. Verbindungselement nach Anspruch 21, **dadurch gekennzeichnet, daß** die Spannhülse (10) im entspannten Zustand einen ovalen Querschnitt, im vorgespannten Zustand einen gegenüber dem entspannten Zustand verformten, z.B. runden oder ovalen Querschnitt, und im teilentspannten Zustand einen ovalen Querschnitt aufweist.

24. Verbindungselement nach Anspruch 21, **dadurch gekennzeichnet, daß** die Spannhülse (10) im entspannten Zustand einen runden oder ovalen Querschnitt, im vorgespannten Zustand einen dreiseitig in radialer Richtung verformten Querschnitt und im teilentspannten Zustand einen dreiseitig gewölbten Querschnitt aufweist.

25. Verbindungselement nach einem der Ansprüche 21 bis 24, **dadurch gekennzeichnet, daß** in die Spannhülse (10) zwei oder mehrere zu verbindende Bauelemente (2, 3) eingesetzt sind, die in der Spannhülse (10) in einem Abschnitt (6) parallel nebeneinander angeordnet sind.

26. Verbindungselement nach einem der Ansprüche 21 bis 25, **dadurch gekennzeichnet, daß** in die Spannhülse (10) zwei oder mehrere zu verbindende Bauelemente (2, 3) eingesetzt sind, die in der Spannhülse (10) stirnseitig aneinanderstoßen oder stirnseitig zueinander orientiert sind.

27. Verbindungselement nach Anspruch 11 und einem der Ansprüche 21 bis 26, **dadurch gekennzeichnet, daß** in die Spannhülse (10) mindestens einer der Schenkel (8, 9) der Schenkelfeder (7) eingesetzt ist.

28. Verbindungselement nach Anspruch 27, **dadurch gekennzeichnet, daß** in die Spannhülse (10) beide Schenkel (8, 9) der Schenkelfeder (7) eingesetzt sind.

29. Verbindungselement nach Anspruch 27 oder 28, **dadurch gekennzeichnet, daß** in die Spannhülse (10) ein weiteres zu verbindendes Bauelement (3) eingesetzt ist, das in der Spannhülse (10) neben dem mindestens einen Schenkel (8) der Schenkelfeder (7) angeordnet ist.

30. Verbindungselement nach einem der Ansprüche 1 bis 29, **dadurch gekennzeichnet, daß** in das Spannelement mindestens ein zu verbindendes Bauelement eingesetzt ist und ein im Eingriff mit dem Spannelement stehender Abschnitt (6) des mindestens einen zu verbindenden Bauelements (2) reibungserhöhend ausgebildet ist.

## Claims

1. Connecting element for mechanically connecting constructive elements (2, 3), comprising an elastically deformable tensioning element which applies a holding force in its elastically deformed state, onto at least one connected constructive element (2), thus generating a non-positive connection of the at least one constructive element (2) with the tensioning element or with another constructive element (3), whereby
the tensioning element comprises a spring material consisting of a superelastic shape memory alloy, in particular a nickel-titanium alloy, elastically expanded in the tensioning element,
**characterized in that**
the tensioning element has a length in an axial direction and at least one constructive element to be connected is inserted in the axial direction of the tensioning element.

2. Connecting element according to claim 1, **characterized in that** the holding force is generated by bending forces and/or shear forces originated by the tensioning element during the elastic expansion of the tensioning element.

3. Connecting element according to claim 1 or 2, **characterized in that** the tensioning element is converted, during assembly, from the austenitic state to the tension-induced martensitic state, by elastic tensioning or expanding, respectively.

4. Connecting element according to any one of claims 1 to 3, **characterized in that** the holding force is a contact pressure generated by the elastic expansion of the tensioning element, applied to the at least one connected constructive element, inserted into the tensioning element.

5. Connecting element according to any one of claims 1 to 4, **characterized in that** the tensioning element comprises a helicoidal spring (1, 4, 7) in the axial direction of which the at least one constructive element (2) to be connected is inserted.

6. Connecting element according to claim 5, **characterized in that** the spring (1, 4, 7) is elastically deformed and pre-tensioned for inserting the at least one constructive element (2), being partially relaxed for realizing the connection.

7. Connecting element according to claim 5, **characterized in that** the spring (1, 4, 7) is tensioned for generating the connection.

8. Connecting element according to claim 5 or 6, **characterized in that** the spring is a compression spring (1), which is compressed in axial direction for inserting the at least one constructive element (2).

9. Connecting element according to claim 5 or 6, **characterized in that** the spring is a tension spring (4), which is stretched in axial direction for inserting the at least one constructive element (2).

10. Connecting element according to claim 8 or 9, **characterized in that** during the insertion of the at least one constructive element (2) the windings of the spring (1, 4) are turned open for increasing the diameter of its windings.

11. Connecting element according to any one of claims 5 to 7, **characterized in that** the spring is a leg spring (7).

12. Connecting element according to claim 11, **characterized in that** the legs (8, 9) of the leg spring (7) are bent up during the insertion of the at least one constructive element (2) in order to increase the diameter of its windings and for pretensioning of the leg spring (7) against the direction of winding of the leg spring (7).

13. Connecting element according to claim 12, **characterized in that** the leg spring (7) is partially relaxed for generating the connection.

14. Connecting element according to claim 12, **characterized in that** the legs (8, 9) of the leg spring (7) are bent together in winding direction of the leg spring (7), exceeding the relaxed state, for a decrease of the diameter of its windings, to obtain the connection.

15. Connecting element according to claim 11, **characterized in that** the leg spring (7) is relaxed during the insertion of the at least one constructive element (2) to be connected, and that the legs (8, 9) of the leg spring (7) are bent together in the winding direction of the leg spring (7) for a decrease of the diameter of its windings and for generating a tension in the leg spring (7), to obtain the connection.

16. Connecting element according to any one of claims 5 to 15, **characterized in that** a constructive element (2) to be connected, is inserted in the spring (1, 4, 7).

17. Connecting element according to any one of claims 5 to 15, **characterized in that** at least two constructive elements (2, 3) to be connected, are inserted in the spring (1, 4, 7).

18. Connecting element according to claim 17, **characterized in that** at least two constructive elements (2, 3) contact each other with their face ends, or are oriented with their ends facing to each other.

19. Connecting element according to claim 18, **characterized in that** connected constructive elements (2, 3) are surrounded, in the range of their contact point, by a joint element, in particular a joint tube (5) or a plurality of joint shells, transferring the holding force of the spring (1, 4, 7) to the constructive elements (2, 3) to be connected.

20. Connecting element according to claim 17, **characterized in that** connected constructive elements (2, 3) within the spring (1, 4, 7) are arranged parallel to each other in a section (6).

21. Connecting element according to any one of claims 1 to 4, **characterized in that** the tensioning element comprises a clamping sleeve (10), in the axial direction of which the at least one constructive element (2) to be connected, is inserted, whereby the clamping sleeve (10) is elastically deformed and pre-tensioned by compression, for inserting the at least one constructive element (2), and is partially relaxed for realizing the connection.

22. Connecting element according to claim 21, **characterized in that** the clamping sleeve (10) shows a circular cross-section in the relaxed state, and shows an oval cross-section in the pre-tensioned and in the partially relaxed state.

23. Connecting element according to claim 21, **characterized in that** the clamping sleeve (10) shows an oval cross-section in the relaxed state, and shows a deformed state as compared to the relaxed state, e.g. a circular or oval cross-section, in the pre-tensioned state, and shows an oval cross-section in the partially relaxed state.

24. Connecting element according to claim 21, **characterized in that** the clamping sleeve (10) shows a circular or an oval cross-section in the relaxed state, and shows a cross-section deformed on three sides in radial direction in the pre-tensioned state, and shows a cross-section arced on three sides in the partially relaxed state.

25. Connecting element according to any one of claims 21 to 24, **characterized in that** two or more constructive elements (2, 3) to be connected, are inserted in the clamping sleeve (10), being arranged parallel to each other within a section (6) of the clamping sleeve (10).

26. Connecting element according to any one of claims 21 to 25, **characterized in that** two or more constructive elements (2, 3) to be connected, are inserted in the clamping sleeve (10), which contact each other with their face ends in the clamping sleeve (10), or which are oriented with their ends facing to each other.

27. Connecting element according to claim 11 and any one of claims 21 to 26, **characterized in that** at least one of the legs (8, 9) of the leg spring (7) is inserted in the clamping sleeve (10).

28. Connecting element according to claim 27, **characterized in that** both legs (8, 9) of the leg spring (7) are inserted in the clamping sleeve (10).

29. Connecting element according to claim 27 or 28, **characterized in that** another constructive element (3) to be connected, is inserted in the clamping sleeve (10), which is arranged, within the clamping sleeve (10), besides the at least one leg (8) of the leg spring (7).

30. Connecting element according to any one of claims 1 to 29, **characterized in that** at least one constructive element to be connected is inserted in the tensioning element, and a section (6) engaged with the tensioning element, of the at least one constructive element (2) to be connected, is friction-increased.

## Revendications

1. Élément de liaison pour la liaison mécanique de composants (2, 3), comprenant un élément de serrage déformable élastiquement, qui exerce dans l'état déformé élastiquement une force de maintien sur au moins un composant à relier (2), par laquelle est réalisée une liaison par adhérence du au moins un composant (2) avec l'élément de serrage ou avec un autre composant (3), dans lequel
l'élément de serrage contient un matériau de ressort en un alliage à mémoire de forme superélastique, en particulier un alliage nickel-titane, qui est en extension élastique dans l'élément de serrage,
**caractérisé en ce que**
l'élément de serrage présente une longueur dans la direction axiale et au moins un composant à relier est inséré dans la direction axiale de l'élément de serrage.

2. Élément de liaison selon la revendication 1, **caractérisé en ce que** la force de maintien est produite par des forces de flexion et/ou de cisaillements émanant de l'élément de serrage lors de l'extension élastique de l'élément de serrage.

3. Élément de liaison selon l'une des revendications 1 et 2, **caractérisé en ce que** l'élément de serrage est transformé par serrage ou extension élastique, lors du montage, de l'état austénite à l'état martensite induit par compression.

4. Élément de liaison selon l'une des revendications 1 à 3, **caractérisé en ce que** la force de maintien est une force de pression provoquée par l'extension élastique de l'élément de serrage, qui est exercée par l'élément de serrage sur le au moins un composant relié inséré dans l'élément de serrage.

5. Élément de liaison selon l'une des revendications 1 à 4, **caractérisé en ce que** l'élément de serrage comprend un ressort enroulé en forme d'hélice (1, 4, 7), dans la direction axiale duquel le au moins un composant relié (2) est inséré.

6. Élément de liaison selon la revendication 5, **caractérisé en ce que** le ressort (1, 4, 7) est déformé élastiquement et précontraint pour l'insertion du au moins un composant (2) et partiellement détendu pour la réalisation de la liaison.

7. Élément de liaison selon la revendication 5, **caractérisé en ce que** le ressort (1, 4, 7) est tendu pour la réalisation de la liaison.

8. Élément de liaison selon l'une des revendications 5 et 6, **caractérisé en ce que** le ressort est un ressort de compression (1), qui est comprimé dans la direction axiale lors de l'insertion du au moins un composant (2).

9. Élément de liaison selon l'une des revendications 5 et 6, **caractérisé en ce que** le ressort est un ressort de traction (4), qui est étiré dans la direction axiale lors de l'insertion du au moins un composant (2).

10. Élément de liaison selon l'une des revendications 8 et 9, **caractérisé en ce que** les spires du ressort (1, 4) sont quelque peu déroulées pour agrandir le diamètre de ses spires.

11. Élément de liaison selon l'une des revendications 5 à 7, **caractérisé en ce que** le ressort est un ressort à branches (7).

12. Élément de liaison selon la revendication 11, **caractérisé en ce que** les branches (8, 9) du ressort à branches (7) sont dépliées contre le sens d'enroulement du ressort à branches (7) lors de l'insertion du au moins un composant (2) pour agrandir le diamètre de ses spires et pour précontraindre le ressort à branches (7).

13. Élément de liaison selon la revendication 12, **caractérisé en ce que** le ressort à branches 7 est partiellement détendu pour réaliser la liaison.

14. Élément de liaison selon la revendication 12, **caractérisé en ce que** les branches (8, 9) du ressort à branches (7) sont pliées l'une vers l'autre dans le sens d'enroulement du ressort à branches (7) au-delà de l'état détendu pour réduire le diamètre de ses spires et réaliser la liaison.

15. Élément de liaison selon la revendication 11, **caractérisé en ce que** le ressort à branches (7) est détendu lors de l'insertion du au moins un composant à relier (2) et les branches (8, 9) du ressort à branches (7) sont pliées l'une vers l'autre dans le sens d'enroulement du ressort à branches (7) pour réduire le diamètre de ses spires et pour produire une tension dans le ressort à branches (7) pour réaliser la liaison.

16. Élément de liaison selon l'une des revendications 5 à 15, **caractérisé en ce qu'**un composant à relier (2) est inséré dans le ressort (1, 4, 7).

17. Élément de liaison selon l'une des revendications 5 à 15, **caractérisé en ce qu'**au moins deux composants à relier (2, 3) sont insérés dans le ressort (1, 4, 7).

18. Élément de liaison selon la revendication 17, **caractérisé en ce qu'**au moins deux composants (2, 3) sont en contact mutuel frontal ou orientés frontalement l'un vers l'autre.

19. Élément de liaison selon la revendication 18, **caractérisé en ce que** des composants reliés (2, 3) sont entourés dans la région de leur point de liaison par un élément de joint, en particulier un tube de joint (5) ou plusieurs coquilles de joints, qui transmet la force de maintien du ressort (1, 4, 7) aux composants à relier (2, 3).

20. Élément de liaison selon la revendication 17, **caractérisé en ce que** des composants reliés (2, 3) sont disposés dans le ressort 1, 4, 7 parallèlement l'un à côté de l'autre dans une section (6).

21. Élément de liaison selon l'une des revendications 1 à 4, **caractérisé en ce que** l'élément de serrage comprend une douille de serrage (10), dans la direction axiale de laquelle le au moins un composant à relier (2) est inséré, la douille de serrage (10) étant déformée élastiquement et précontrainte par compression pour l'insertion du au moins un composant (2) et partiellement détendue pour réaliser la liaison.

22. Élément de liaison selon la revendication 21, **caractérisé en ce que** la douille de serrage (10) présente une section transversale circulaire dans l'état détendu et une section transversale ovale dans l'état précontraint et partiellement détendu.

23. Élément de liaison selon la revendication 21, **caractérisé en ce que** la douille de serrage (10) présente une section transversale ovale dans l'état détendu, une section transversale déformée par rapport à l'état détendu, par exemple circulaire ou ovale, dans l'état précontraint, et une section transversale ovale dans l'état partiellement détendu.

24. Élément de liaison selon la revendication 21, **caractérisé en ce que** la douille de serrage (10) présente une section transversale circulaire ou ovale dans l'état détendu, une section transversale déformée de trois côtés dans la direction radiale dans l'état précontraint et une section transversale bombée de trois côtés dans l'état partiellement détendu.

25. Élément de liaison selon l'une des revendications 21 à 24, **caractérisé en ce que** deux ou plusieurs composants à relier (2, 3) sont insérés dans la douille de serrage (10), qui sont disposés dans la douille de serrage (10) parallèlement les uns à côté des autres dans une section (6).

26. Élément de liaison selon l'une des revendications 21 à 25, **caractérisé en ce que** deux ou plusieurs composants à relier (2, 3) sont insérés dans la douille de serrage (10), qui sont en contact mutuel frontal ou sont orientés frontalement l'un vers l'autre dans la douille de serrage (10).

27. Élément de liaison selon la revendication 11 et l'une des revendications 21 à 26, **caractérisé en ce que** l'une au moins des branches (8, 9) du ressort à branches (7) est insérée dans la douille de serrage (10).

28. Élément de liaison selon la revendication 27, **caractérisé en ce que** les deux branches (8, 9) du ressort à branches (7) sont insérées dans la douille de serrage (10).

29. Élément de liaison selon l'une des revendications 27 et 28, **caractérisé en ce qu'**un autre composant à relier (3) est inséré dans la douille de serrage (10), qui est disposé dans la douille de serrage (10) à côté de la au moins une branche (8) du ressort à branches (7).

30. Élément de liaison selon l'une des revendications 1 à 29, **caractérisé en ce qu'**au moins un composant à relier est inséré dans l'élément de serrage et une section (6) du au moins un composant à relier (2), qui est en prise avec l'élément de serrage, et conformé de manière à accroître la friction.
